# EUROPÄISCHE PATENTANMELDUNG

(11) **EP 0 825 155 A1**
(43) Veröffentlichungstag der Anmeldung: **25.02.1998**
(21) Anmeldenummer: 96250178.9
(22) Anmeldetag: 16.08.1996
(51) Int. Cl.: C03B 9/36

(54) **Verfahren zur Herstellung von Hohlglaskörpern sowie Hohlglaskörper erhöhter mechanischer Festigkeit**

(71) Anmelder: Hessenkemper, Heiko, Prof. Dr., 09603 Grossschirma (DE)
(72) Erfinder: Hessenkemper, Heiko, Prof. Dr., 09603 Grossschirma (DE)
(74) Vertreter: Pobel, Dieter Dipl.-Chem.

(57) **Zusammenfassung**

Aufgabe der Erfindung ist es, den erheblichen Aufwand zur Erhöhung der mechanischen Festigkeit von Hohlglaskörpern zu senken und ein unbedenkliches und einfaches Verfahren zur Herstellung von Hohlglaskörpern vorzuschlagen. Gleichzeitig soll die Fertigungszeit erheblich gesenkt werden.

Erfindungsgemäß wird die Blaspreßluft in der Vor- und/oder Fertigform des Blas- Blas- Formgebungsverfahrens oder in der Fertigform des Preß- Blas- Formgebungsverfahrens vollständig oder teilweise durch Wasserdampf oder nebelförmiges Wasser oder nebelförmige wässrige Alkalisalzlösungen ersetzt.

Mit dem erfindungsgemäßen Verfahren wird die mechanische Festigkeit von Hohlglaskörpern um mindestens 10 % erhöht. Gleichzeitig wird, unabhängig vom Grad der Festigkeitserhöhung, die Fertigungszeit um mindestens 20 % verkürzt.

## Beschreibung

Die Erfindung betrifft ein Verfahren zur Herstellung von Hohlglaskörpern nach dem Blas - Blas - und Press - Blas - Formgebungsverfahren mit erhöhter mechanischer Festigkeit und verkürzten Fertigungszeiten.

Die mechanische Festigkeit von Glas wird entscheidend vom Zustand seiner Oberfläche bestimmt. Zur Verbesserung der Gleiteigenschaften und Erhöhung der Schlagfestigkeit von Hohlglasgegenständen werden in der industriellen Praxis seit längerem eine Kombination von Heiß- und Kaltendvergütungen zum Einsatz gebracht. Diese bestehen in wesentlichen aus einem Aufbringen von Zinn- und/oder Titanoxid auf die heiße Glasoberfläche mittels Auftragen von Chlorid- bzw. Alkoholatlösungen für den Heißendbereich (DE 38 011 11) oder aus organischen Schichten für den Kaltendbereich (DE 28 244 03).
Eine umfassende Darstellung des Standes der Technik ist in HANS JEBSEN- MARWALD und ROLF BRÜCKNER, Glastechnische Fabrikationsfehler, 3. Auflage (1980) Springer- Verlag Berlin - Heidelberg- New York, Seiten 505 bis 517, dargestellt.
Hier wird auch ein Verfahren des Ionenaustausches auf chemischem Wege beschrieben. Dazu werden bevorzugt Natrium- oder Kalium- gegen Lithium-Ionen oder auch Natrium- gegen Kalium- Ionen ausgetauscht. Hierzu wird eine entsprechende Salzschmelze oder Paste verwendet. Nachteilig ist der enorm hohe Zeitaufwand. Die Vergütung von Glas unter Verwendung von sauren Gasen (SO₂ oder SO₃) beschränkt sich auf die Erhöhung der Wasserbeständigkeit.
Die Nachteile dieser Verfahren liegen in ihren relativ hohen Kosten und den verfahrenstechnischen Problemen hinsichtlich der Konstanz der Prozeßbedingungen und der Entsorgungfrage der Reststoffe.

Weiterhin ist trotz der unbedenklichen Verwendung in der Nahrungsmittelindustrie der Wunsch vieler Kunden sehr deutlich, die Innenflächen und Mündungen der Glasbehälter frei von Vergütungsmitteln zu halten.

Weiterhin sind Verfahren und Vorrichtungen bekannt (DE - PS 388 201, DE - PS 390 675 und DE - PS 419 169), die Wasser anwenden, das unter Verwendung der Prozeßwärme aus der Schmelze und/oder Vorrichtung in Wasserdampf überführt wird und als Ausblasmedium zum Ausblasen des Hohlglaskörpers dient. Eine positive Beeinflussung der Eigenschaften der Hohlglaskörper wird dadurch nicht erreicht. Vielmehr werden durch den für die Verdampfungswärme benötigten lokalen Wärmeentzug große thermisch induzierte Spannungen im Glaskörper erzeugt.

In AT - PS 24 927 ist ein Verfahren beschrieben, um die Glaspreßformen auf angemessener Temperatur zu halten. Hierbei wird in den hohlen Innenraum der Glasform Wasser eingetropft oder eingespritzt, das durch die Verdampfung des Wassers die überschüssige Wärme der Form absorbiert.
Die mechanische Festigkeit des Glases wird dadurch nicht verbessert.

Die bekannten Verfahren führen zur Verlängerung der Fertigungszeiten und zu einem erhöhten Ausschuß. Eine Erhöhung der mechanischen Festigkeit wird nur mit einem erheblichen Aufwand erreicht.

Aufgabe der Erfindung ist es, den erheblichen Aufwand nach dem Stand der Technik zur Erhöhung der mechanischen Festigkeit von Hohlglaskörpern erheblich zu senken und ein unbedenkliches und einfaches Verfahren zur Herstellung von Hohlglaskörpern vorzuschlagen. Gleichzeitig soll die Fertigungszeit (Zykluszeit) erheblich gesenkt werden.

Erfindungsgemäß wird die Blaspreßluft in der Vor- und/oder Fertigform des Blas- Blas- Formgebungsverfahrens oder in der Fertigform des Preß- Blas- Formgebungsverfahrens vollständig oder teilweise durch Wasserdampf oder nebelförmiges Wasser oder nebelförmige wässrige Alkalisalzlösungen ersetzt.

Gegenstand der Erfindung sind auch Hohlglaskörper mit erhöhter mechanischer Festigkeit, die nach diesem Verfahren hergestellt werden.

Die erfindungsgemäß zugeführten Mittel stehen im weiteren Verlauf des Formgebungs- und Abkühlungsprozesses der Innenoberfläche zur Reaktion zur Verfügung. Die Reaktion der Innenfläche mit der mit Wasserdampf gesättigten bzw. übersättigten Atmosphäre führt zu einer Viskositätserniedrigung durch OH-Gruppenanreichung in einer dünnen Oberflächenschicht, die die sonstigen Eigenschaften des Hohlglaskörpers (Geometrie, Krummheit u.a.) nicht beeinflussen.
Im Kühlofen wird für einen längeren Zeitraum durch die niedrigviskose Innenflächenschicht eine beschleunigte Rißausheilung erreicht. Der Abkühlungsprozeß ist mit einer Volumen - kontraktion der im Hohlglaskörper befindlichen Gasvolumina verbunden, so daß im wesentlichen Umgebungsluft zuströmt.

Die erfindungsgemäß hergestellten Hohlglaskörper weisen eine mechanische Festigkeitserhöhung von mindestens 10 % auf, wobei die Fertigungszeit, unabhängig vom Grad der Festigkeitserhöhung, um mindestens 20 % reduziert werden kann.

Die Erfindung soll nachstehend an zwei Ausführungsbeispielen näher erläutert werden.

### Beispiel 1:

Die sonst übliche Blaspreßluft wird vollständig durch Wasserdampf mit hoher Konzentration und hoher Dampftemperatur ersetzt. Die üblichen Verfahrensparameter werden beibehalten. Es wird eine Festigkeitserhöhung von 20 % ermittelt. Die Zykluszeit verringert sich um 25 %.

### Beispiel 2:

Der Blaspreßluft wird nebelförmiges Wasser oder eine wässrige Alkalisalz- Lösung zugemischt. Hierbei wird zusätzlich zur Viskositätserniedrigung noch eine aus dem Stand der Technik bekannte chemische Härtung durch den Einbau von Ionen mit höherem Ionenradius und der daraus resultierenden Erzeugung von Druckspannungen erzielt.
Die Verwendung von nebelförmigem Wasser oder wässrigen Lösungen erfordert eine feine Dosierung des eingesprühten Nebels, da ansonsten durch den für die Verdampfungswärme benötigten lokalen Wärmeentzug große thermisch induzierte Spannungen erzeugt werden und die rißausheilende Wirkung des Verfahrens überdeckt wird.
Im Ergebnis wird eine Festigkeitserhöhung des Hohlglaskörpers um 30 % erreicht. Die Fertigungszeit verringert sich um 35 %.

## Patentansprüche

1. Verfahren zur Herstellung von Hohlglaskörpern mit erhöhter mechanischer Festigkeit und verkürzten Fertigungszeiten nach dem Blas - Blas - oder Preß - Blas - Formgebungsverfahren, dadurch gekennzeichnet, daß die Blaspreßluft in der Vorund/oder Fertigform des Blas - Blas - Formgebungsverfahrens oder in der Fertigform des Preß - Blas- Formgebungsverfahrens vollständig oder teilweise durch Wasserdampf oder nebelförmiges Wasser bzw. nebelförmige wässrige Alkalisalzlösungen ersetzt wird.

2. Hohlglaskörper mit erhöhter mechanischer Festigkeit hergestellt nach Anspruch 1.
